(19) Europäisches Patentamt
European Patent Office
Office européen des brevets

(11) Publication number: 0 250 629 B1

# (12) EUROPEAN PATENT SPECIFICATION

(45) Date of publication of the patent specification: 16.05.90

(51) Int. Cl.$^5$: C09J 133/00, C08L 33/06

(21) Application number: 86108956.3

(22) Date of filing: 01.07.86

(54) **Emulsion type adhesive system.**

(43) Date of publication of application: 07.01.88 Bulletin 88/1

(45) Publication of the grant of the patent: 16.05.90 Bulletin 90/20

(84) Designated Contracting States: DE FR GB IT

(56) References cited:
EP-A- 0 079 725
EP-A- 0 098 091

(73) Proprietor: National Starch and Chemical Corporation, 10 Finderne Avenue, P.O. Box 6500, Bridgewater, New Jersey 08807(US)

(72) Inventor: Yoshimura, Takuji, 10-104, 1-ban, Kitamidorigaoka, 2-chome Toyonaka-shi Osaka(JP)
Inventor: Hanazawa, Hideake, 1-502, 13-ban, Senbanishi 2-chome Mino-shi Osaka(JP)
Inventor: Takagi, Motoyuki, 24-14, Higashinakajima 2-chome, Higashiyodojawa-ku Osaka-shi Osaka(JP)

(74) Representative: Hagemann, Heinrich, Dr. Dipl.-Chem. et al, Patentanwälte HAGEMANN & KEHL Ismaninger Strasse 108 Postfach 860329, D-8000 München 86(DE)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



ACTORUM AG

## Description

This invention relates to an emulsion type adhesive system with which early initial adhesion and high bond strength can be obtained.

So far known adhesive compositions for the main use organic solvents as the media. From the viewpoints of safety, resources saving and no environmental pollution, emulsion type adhesive have recently come into frequently use. Such characteristics as early initial adhesion and high bonding strength are required particularly of the above-mentioned emulsion type adhesives, however. To meet these requirements, the following measures, among others, have been proposed so far:

(a) To increase the solid content and viscosity of the adhesive;
(b) To improve the drying characteristics by addition of an organic solvent;
(c) To promote the evaporation of water through application of the adhesive after heating of the same and/or the adherends;
(d) To apply an ionic thermoplastic resin-based emulsion type adhesive to one adherend and a thermoplastic resin-based emulsion type adhesive opposite in ionicity to the former to another adherend and, while the adhesives are still wet, assemble the adherends under pressure (cf. Japanese Kokai Tokkyo Koho No.47-34537);
(e) To precoat one or both adherends with a water-absorbing polymer containing an emulsion breaker, then apply an emulsion type adhesive and assemble the adherends under pressure (cf. Japanese Kokai Tokkyo Koho No. 54-154429);
(f) To add to a rubber latex a weakly acidic, inorganic accelerator, such as ammonium sulfate or ammonium nitrate, and/or a film coalescing aid, such as a quaternary alkylammonium salt or a fluorosilicate (cf. Japanese Kokai Tokkyo Koho No. 56-9953 and No. 56-53164); and
(g) To cause coagulation of a carboxyl-containing aqueous acrylic emulsion using an aqueous solution of a multivalent metal salt (cf. Japanese Kokai Tokkyo Koho No. 57-63371).

However, each of the above mentioned measures has its drawbacks as follows:

Measure (a) by itself has its limit in that to increase the solid content unlimitedly is impossible in view of the pot life, workability and the like characteristics of the adhesive;

Measure (b) may cause trouble from the safety and hygiene and/or environment protection viewpoint because of the use of a solvent.

Measure (c) is disadvantageous in that equipment for heating as well as energy is required and that some adherends are susceptible to heating and this measure cannot be applied to such.

Measure (d) is indeed effective to some extent in producing improvement in the initial adhesion force but it uses a thermoplastic resin, without utilizing a curing reation such as crosslinking, so that, when taken at or below ordinary temperature, gives only very low bonding strength. For obtaining high bonding strength, the use of a resin having a high glass transition temperature is essential and this means the necessity of heat treatment. This measure has these and other fatal drawbacks.

Measure (e) requires drying after application of the water-adsorbing polymer since, without drying, the expression of the initial bond strength is retarded. A drying step is thus required and this prolongs the whole adhesion process. Moreover, this measure is not suited for application in the fields where water-resistant adhesion is required, since a layer weak in water resistance is formed on the adhesive interface.

Measures (f) and (g) are indeed effective to some extent in improving the initial bond strength but are still unsatisfactory since, when they are taken at or below ordinary temperature, considerably low bond strength is obtained for the same reason as mentioned for measure (d). For obtaining high bond strength, heat treatment is required. In particular, measure (f), which uses a rubber latex, gives adhesion poor in weatherability, heat resistance, water resistance, alkali resistance, etc.

In this manner, each of the above series of proposed measures has its drawbacks and can hardly achieve the object which consists in achieving early initial adhesion and high bonding strength.

Recently, the development of alkali-crosslinkable monomers is in progress and it has been proposed to use such momoners in adhesive compositions (cf. Japanese Kokai Tokkyo Koho No. 59-129280). According to this proposal, an alkali-crosslinkable emulsion type adhesive is applied to the concrete surface, whereby the alkali components leached out from concrete cause formation of a crosslinked adhesive layer. This technique has a drawback, however, in that the initial bond strength is low since the adhesive layer formation depends on air drying. Furthermore, the neutralization reaction due to carbon dioxide in the air is in progress on the concrete surface and accordingly the quantity of alkali components occurring on the surface is decreasing, so that said technique is applicable only during a short period following concrete placing. Therefore, the utility of said technique is disadvantageously limited.

EP-A 98 091 discloses a mixture which is ordinarily stable for at least one shift (8 hours) and most often for weeks at this pH (about 9 to 10) at room temperature. As such, the polymer composition disclosed

will not react immediately to produce a binding effect when the components are mixed but will require additional treatment to initiate the cure and produce the binding effect. In examples 26–101 the mixtures are cures placing the blend in the spot test plate, air drying for several days and final drying at 60°C for 2 hours. EP-A 79 725 describes emulsions of an anionic component and of a cationic component which are stable when blended. The curing is accomplished by addition of alkali. Further, as example 7 notes, curing is accomplished by adjusting the pH to 11.2 with sodium hydroxide, and then heating the blend at 125°C for 15 minutes and allowing the system to be incubated at the application temperature for 10 days. The preferred Tg for an acrylic resin is above 25°C.

Accordingly, it is an object of the invention to provide an emulsion type adhesive system suited for wide use with which early initial adhesion and high bonding strength can be obtained and which can be applied by simple and easy bonding operation.

In accordance with the present invention, the above object can be accomplished by providing an emulsion type adhesive system which comprises a first liquid which is a cationic emulsion containing, as a main component thereof, component (A) defined below and a second liquid which is a flocculant composition containing component (B) defined below and having a pH of not less than 7.5, said first and second liquid, upon contact therebetween or mixing with each other, producing a binding effect:

(A) an acrylic resin obtained by copolymerization of at least one ethylenically unsaturated, alkali-crosslinkable monomer of the general formula

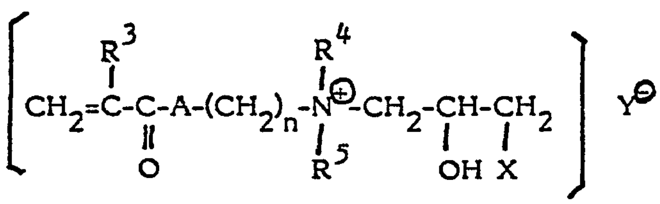 (1)

[wherein $R^3$ is a hydrogen atom or a methyl group, $R^4$ and $R^5$ may be the same or different and each is a methyl or ethyl group, A is -O- or -NH-, X is a chlorine, bromine or iodine atome, Y is an organic or inorganic anion, and n is an integer of 2 or 3,

and at least one acrylic ester of formula (2) given below:

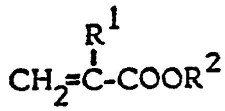 (2)

[wherein $R^1$ is a hydrogen atom or a methyl group and $R^2$ is an alkyl group containing 1-18 carbon atoms or a cycloalkyl group;]

(B) an anionic compound, characterized in that said acrylic resin has a glass transition temperature of not higher than 0°C.

Thus, the above-mentioned emulsion type adhesive system comprises the first liquid consisting of a cationic emulsion and the second liquid or flocculant composition. When said first liquid is contacted or mixed with said second liquid, there is produced for the first time a binding effect. Since no adhesion is effective until both the liquids are contacted or mixed with each other, the period from the time when either the first or the second liquid is applied to adherends to the time when both the liquids are to be contacted or mixed with each other can be prolonged and this facilitates the adhesion operation. The above adhesive system is rich in long-term preservability since, as mentioned above, no binding effect is produced until the first and second liquids are brought into contact with each other. Furthermore, the above first and second liquids contain the above components (A) and (B), respectively and as a result, when brought into contact with each other, produce, as the whole composition, rapid initial adhesion and excellent bond strength.

The main component of the above-mentioned cationic emulsion is an acrylic resin produced by copolymerization of an ethylenically unsaturated, alkali-crosslinkable monomer of the above formula (1) and an acrylic ester of the above general formula (2) and having a glass transition temperature of not higher than 0°C.

The ethylenically unsaturated, alalkicrosslinkable monomer to be used in synthesizing said acrylic resin is typically an epihalohydrin groupcontaining monomer. Typical examples are diethylamino-propylacrylamide-epichlorohydrin adduct, di(hydroxy-ethyl)aminopropylacrylamide-epichlorohydrin adduct, dimethylaminoethylacrylamide-epichlorohydrin adduct, dimethylaminophenylacrylamide-epichlorohydrin adduct, morpholinoethylacrylamide-epichlorohydrin adduct, pyrrolidinoethylacrylamide-epichlorohydrin adduct, dimethylaminopropylmethacrylamide-epichlorohydrin adduct, diethylaminoethylmethacrylamide-epichlorohydrin adduct, dimethylaminocyclohexylmethacrylamide-epichlorohydrin adduct, piperidinopropylmethacrylamide-epichlorohydrin adduct, dimethylaminoethyl acrylate-epichlorohydrin adduct, dimethylaminopropyl acrylate-epichlorohydrin adduct, diethylaminoethyl acrylate-epichlorohydrin adduct, diethylaminopropyl acrylate-epichlorohydrin adduct, dimethylaminoethyl methacrylate-epichlorohydrin adduct, dimethylaminopropyl methacrylate-epichlorohydrin adduct and diethylaminopropyl methacrylate-epichlorohydrin adduct.

The halohydrin moiety of the monomers of the above formula (1) may optionally be replaced by an oxygen-bridged structure (glycidyl). Therefore, the alkali-crosslinkable monomers to be used in the practice of the invention may contain the glycidyl form derived therefrom in small amounts.

The acrylic ester of the above general formula (2) which is to be copolymerized with the above-mentioned alkali-crosslinkable monomers may roughly be classified into the two categories, acrylate ester and methacrylate ester. Typical examples of the acrylate ester are methyl acrylate, ethyl acrylate, propyl acrylate, butyl acrylate, amyl acrylate, hexyl acrylate, 2-ethylhexyl acrylate, n-octyl acrylate, decyl acrylate, lauryl acrylate, cetyl acrylate, myristyl acrylate, stearyl acrylate and cyclohexyl acrylate. Typical examples of the methacrylate ester are methyl methacrylate, ethyl methacrylate, propyl methacrylate, butyl methacrylate, amyl methacrylate, hexyl methacrylate, 2-ethylhexyl methacrylate, n-octyl methacrylate, decyl methacrylate, lauryl methacrylate, myristyl methacrylate, cetyl methacrylate, stearylmethacrylate and cyclohexyl methacrylate. These esters may be used either alone or in combination.

If necessary, other unsaturated monomers copolymerizable with these esters may also be used in respective quantity ranges in which the desirable properties of the product acrylic resins are not impaired. Examples of such copolymerizable monomers are such vinyl monomers as vinyl acetate, styrene and α-methylstyrene, such nitrile monomers as acrylonitrile and methacrylonitrile, such ester monomers as dibutyl maleate, vinyl versatate, glycidyl acrylate and glycidyl methacrylate, such crosslinking monomers as divinylbenzene, allyl acrylate, ethylene glycol dimethacrylate, trimethylolpropane triacrylate and trimethylolpropane trimethacrylate, and such cationic monomers as dimethylaminoethyl methacrylate, diethylaminoethyl methacrylate and dimethyldiallylammonium chloride.

The copolymerization of the above-mentioned acrylic ester or esters with the ethylenically unsaturated, alkali-crosslinkable is carried out in the same manner as in the production of known aqueous acrylic ester copolymer emulsions. In that case, when the proportion, in the product acrylic resin, of structural moiety derived from the above-mentioned alkali-crosslinkable monomer is too small, the density of crosslinking in the resultant emulsion type adhesive system becomes low and the bond strength also becomes low. Conversely, when said proportion is excessive, the rate of cure becomes excessively rapid and this is unfavorable since the initial tack of the adhesive layer is lost rapidly and at the same time the cost of the adhesive system becomes increased. Therefore, in carrying out the polymerization, it is preferable to select the amount of the alkali-crosslinkable monomer (comonomer) at a level of 0.5-25% relative to the whole quantity of monomers used. The most preferred level is 1-10% by weight. In this manner, the repeating unit derived from the above-mentioned ethylenically unsaturated, alkali-crosslinkable monomer becomes contained in the product acrylic resin in an amount of 0.5-25% by weight, whereby the desired effect can be produced. The thus-produced acrylic resin should have a glass transition point of not higher than 0°C, preferably not higher than -10°C. Generally, the glass transition point of an acrylic resin largely depends on the size of the alkyl group in the (meth)acrylate ester monomer. The greater the number of carbon atoms contained in the alkyl group is, the lower the glass transition point is. Therefore, in accordance with the invention, the alkyl group of the (meth)acrylate ester should have 1-18 carbon atoms so that the glass transition temperature of the product acrylic resin can be not higher than 0°C. When the glass transition point of the acrylic resin is higher than 0°C, the adhesive layer formed as a result of contact between the cationic emulsion (first liquid) and the flocculant composition (second liquid) becomes brittle and fragile and the initial bond strength becomes very low. Particularly the acrylic resin has a glass transition point of not higher than -10°C, the adhesive resin layer has a compact structure and the strength of the adhesive layer formed becomes high. This means an increased initial bond strength.

The above polymerization of the alkali-crosslinkable monomer or monomers and acrylic ester or esters in substantially the same manner as in the production of known aqueous emulsions gives a cationic emulsion with the acrylic resin is dispersed therein as the emulsion resin.

The flocculant composition which causes development of a bond strength upon contact or mixing with the cationic emulsion produced in the above manner contains an anionic compound. When brought into

contact with the cationic emulsion, said flocculant composition causes rapid flocculation of the emulsion particles of the acrylic resin in said cationic emulsion, leading to the formation of an adhesive layer and the development of an initial bond strength. At the same time, said flocculant composition effectively promotes the curing reaction in the adhesive layer by causing crosslinking of the alkali-crosslinkable structural moieties in the acrylic resin owing to the alkaline compound or compounds contained therein.

The above-mentioned anionic compound includes water-soluble anionic resins, such as sodium salt of polyacrylic acid, and styrene-maleic acid copolymer, anionic surfactants, such as sodium alkylbenzenesulfonate, sodium alkyl sulfate and fatty acid soaps, anionic resin emulsions, and anionic inorganic emulsions, such as colloidal silica. These may be used either alone or in combination. Among these anionic compounds, preferred are water-soluble anionic resins, anionic surfactants and anionic resin emulsions, which, when used either alone or in combination, are particularly effective in improving the initial bond strength.

For attaining an excellent bond strength by effectively causing the curing reaction based on the alkali-crosslinkable sites on the acrylic resin to proceed, it is preferable to select a pH of the above flocculant composition at a level not lower than 7.5. The most preferred level is 9 or higher. The pH adjustment can be made by using, either singly or in combination, ammonia, an amine, an alkali or alkaline earth metal hydroxide, carbonate or hydrogen carbonate, etc.

The above-mentioned cationic emulsion and flocculant composition each may contain an adequate amount of another rubber latex, synthetic resin emulsion, tackifier resin emulsion and/or the like which is identical thereto in electric charge. As such rubber latex and synthetic resin emulsion, there may be mentioned natural rubber, butadiene rubber, butadiene-styrene rubber, butadiene-acrylonitrile rubber, chloroprene rubber and polyurethane latices and polyvinyl acetate, ethylene-vinyl acetate copolymer and vinyl chloride-vinyl acetate copolymer emulsions, among others. Examples of the tackifier resin emulsion are unesterified or esterified rosin, unesterified or esterified modified rosin, phenolic resin, rosin- and alkylphenol-modified xylene resin, terpene-phenolic resin, terpene resin (e.g. $\alpha$- and/or $\beta$-pinene polymer), aliphatic hydrocarbon resin, coumarone-indene resin, styrene-based resin and aromatic petroleum resin emulsions. The above-mentioned cationic emulsion and flocculant composition each may further contain an adequate amount of colorant, antifoam, thickener viscosity modifier, preservative, fungicide and/or the like as necessary.

The emulsion type adhesive system according to the invention is a two-pack system and comprises a cationic emulsion as the first liquid and a flocculant as the second liquid and when both the liquids are brought into contact or mixed with each other, the whole composition or mixture serves as an adhesive, developing an adhesive force. In that case, it is fundamental that the above-mentioned cationic emulsion (first liquid) and the flocculant composition (second liquid) should be used in a ratio such that the whole cationic charge is substantially equivalent to the whole anionic charge. When they are used in a ratio extremely far from the equal charge-based ratio, the flocculant capacity of the cationic emulsion becomes decreased and, as a result, the initial bond strength becomes low and the water resistance of the bond also becomes low. The equal charge ratio can be determined in a convenient manner by adding the flocculant composition to the cationic emulsion with stirring and estimating the quantity of the former as required to make the aqueous phase transparent. The quantity ratio in which the cationic emulsion and the flocculant composition are to be used need not be exactly equal to the equal charge ratio. The use of the flocculant composition in a proportion within the range of 30-300% by weight (hereinafter abbreviated as "%" for short) on the equal charge basis can result in development of good initial bond strength.

For bonding an adherend to another with a cationic emulsion and a flocculant which are prepared as above, the following and other methods are available.

(a) One of the substrates is sprayed with said cationic emulsion and flocculant using a double-heated spray gun and the other adherend is superimposed on the sprayed adherend under pressure.

(b) The cationic emulsion is coated on one of the adherends by means of a brush, a roller or the like and while the emulsion is not dry as yet, the flocculant is sprayed over it by means of a spray gun or the like. The other adherend is then superimposed on the sprayed adherend under pressure.

(c) One of the adherends is coated with the flocculant by means of a brush, a roller or a spray gun and while the flocculant is not dry as yet, the cationic emulsion is sprayed over it with a spray gun. Then, the other adherend is superimposed under pressure.

(d) One of the adherends is coated with the flocculant by means of a brush, a roller or a spray gun and, then, the cationic emulsion is sprayed over it. The flocculant is further sprayed over it with a spray gun and the other adherend is pressed against it.

(e) The cationic emulsion is applied to one of the adherends and the flocculant to the other adherend. The two adherends are jointed under pressure.

Of these alternative methods, the optimum method may be chosen according to the type of adherend, etc.

As the cationic emulsion is brought into contact with the flocculant in the above arrangement, the emulsion is immediately broken to form an adhesive layer so that there is obtained a very early onset of initial bond strength. In this connection, as the acrylic resin comprising a repeating unit derived from an alkali-crosslinkable monomer is present in the cationic emulsion only, said alkali-crosslinkable repeating unit in the acrylic resin does not undergo cross-linking during storage so that the emulsion has a satisfactory shelf life. Thus, the above cationic emulsion is designed to be acidic because it is stable under acidic conditions and the alkali-crosslinkable moieties of the acrylic resin are, therefore, not liable to undergo crosslinking. If such an acrylic resin be incorporated in the flocculant which is alkaline, the alkali-crosslinkable repeating unit of the acrylic resin would undergo crosslinking during storage to cause curing so that the emulsion adhesive composition would show only a low initial bond strength and, also, a low equilibrium bonding strength. Thus, as the emulsion adhesive system according to the present invention contains said acrylic resin in a cationic emulsion component, it has a long storage life and when contacted or mixed with said flocculant, it gives a rapid onset of initial bond strength. And the crosslinking reaction in the adhesive layer is induced by the alkali component supplied from the flocculant, a very high bond strength is realized. Therefore, the adhesive system according to the present invention is appliable to new uses where the conventional emulsion adhesives could not be employed. Moreover, it makes the bonding operation easier.

As the emulsion adhesive system according to the present invention comprises, as aforementioned, a first liquid consisting in a cationic emulsion based on said acrylic resin and a second liquid consisting in a flocculant containing an anionic compound and having a pH value of at least 7.5, both the first and second liquids remain stable until they are brought together and an adhesive power is displayed only upon contacting or admixing of them on the substrate surface. Therefore, the adhesive system has an excellent workability. Furthermore, due to the interactions of said acrylic resin and the anionic compound in the flocculant, an adhesive resin layer is quickly formed upon contacting or admixing of the two liquids, with the result that a sufficient initial bond strength is developed at an early time. Then, as crosslinking of the acrylic resin progresses, subsequently a strong equilibrium bond strength is achieved. Furthermore, as the acrylic resin in the adhesive layer has a glass transition point of less than 0°C, it ensures excellent elasticity not only in the high temperature region but also in the low temperature region and, therefore, the adhesive layer as a whole is highly flexible over a broad temperature range so that it withstands marked change in ambient temperature. Therefore, the adhesive system according to the present invention is very effective in bonding adherends located or to be used outdoors where atmospheric temperature fluctuates widely.

The following working and comparative examples are further illustrative of the present invention.

<u>Examples 1 to 6 and Comparative Example 1</u>

First, a cationic emulsion was produced in the following manner.

Production of a cationic emulsion

A four-necked flask of 500 cc capacity, fitted with a stirrer, a reflux condenser, a monomer drip funnel and a thermometer, was charged with 5 weight parts (hereinafter referred to briefly as parts) of a cationic surfactant (Kotamin 24P, Kao Corportion) and 125 parts of water. The temperature was increased to 70°C and 0.5 part of a cationic polymerization initiator (V50, Wako Pure Chemical Industries). Then, one of the sets of monomers shown in Table 1 was sequentially added and reacted over a period of 3 hours. The reaction was conducted in a nitrogen stream. After completion of the addition of monomers, the reaction mixture was ripened for one hour to give 500 g of the desired cationic emulsion.

Production of a flocculant

A 4% aqueous solution of an anionic surfactant (Emal 0, Kao Corporation) was prepared and its pH was adjusted to pH 10 with sodium carbonate.

Using the above cationic emulsion and flocculant, the following bond strength test was performed.

Bond strength test

Using a double-headed spray gun, the above-mentioned cationic emulsion and flocculant were concurrently sprayed in the weight ratio of 100 to 20 onto a flexible plate. The spray coverage was 300 g/m$^2$.

After the spray coating, a butyl rubber-EPDM-galvanized sheet (Nitroof 601, Nitto Electric Industrial) was immediately superposed on the above-mentioned flexible plate under pressure. One minute and 24 hours, the sheet was subjected to a 180°C peel test at a pulling speed of 300 mm/min. to determine the initial bond strength and equilibrium bond strength. The results are given in Table 1.

Table 1

| Test No. | | Example 1 | Example 2 | Example 3 | Example 4 | Example 5 | Example 6 | Comparative Example 1 |
|---|---|---|---|---|---|---|---|---|
| Monomer composition (parts) | Methyl acrylate | 29.5 | 29 | 25 | 20 | 5 | 0 | 30 |
| | 2-Ethylhexyl acrylate | 70 | 70 | 70 | 70 | 70 | 70 | 70 |
| | DMAEM-EP* | 0.5 | 1 | 5 | 10 | 25 | 30 | 0 |
| Initial bond strength (g/25 mm) | | 550 | 800 | 880 | 910 | 540 | 330 | 110 |
| Bond strength (g/25 mm) | | 1520 | > 2000 | > 2000 | > 2000 | 1580 | 1110 | 650 |

* Dimethylaminoethyl methacrylate-epichlorohydrin adduct

It is apparent from the results in Table 1 that while Examples 1 to 4 are excellent in both initial bond strength and equilibrium bond strength, Examples 5 and 6 which contain large proportions of dimethylaminoethyl acrylate-epichlorohydrin adduct, which is an alkali-crosslinkable monomer, are low in initial bond strength for that very reason. Comparative Example 1 wherein none of the said monomer is contained are drastically low in both initial bond strength and equilibrium bond strength.

Examples of 7 to 9 and Comparative Example 2

The monomer compositions for the production of cationic emulsions were varied as shown in Table 2. Otherwise, the same procedure as Examples 1 to 6 was followed to prepare cationic emulsions. Using these cationic emulsions in combination with the flocculant prepared in the same manner as Example 1, the

bonding strength of each system was investigated by the bond strength test described in Examples 1 to 6. The results are set forth in Table 2.

Table 2

| | | Example 7 | Example 8 | Example 9 | Comparative Example 2 |
|---|---|---|---|---|---|
| Monomer composition (parts) | Butyl acrylate | 78 | 62 | 54 | 47 |
| | Methyl acrylate | 20 | 36 | 44 | 51 |
| | DMAPAM · EP* | 2 | 2 | 2 | 2 |
| Tg of polymer (°C) | | −30 | −10 | 0 | +10 |
| Initial bond strength (g/25 mm) | | 880 | 590 | 220 | 30 |
| Bond strength (g/25 mm) | | 1880 | 1280 | 1020 | 310 |

* Dimethylaminopropylacrylamide-epichlorohydrin adduct

Example 7 to 9 are excellent in both initial bond strength and equilibrium bond strength because the glass transition point of the polymer dispersed in the cationic emulsions is not higher than 0°C, but Comparative Example 2 wherein the glass transition point of the polymer used is 10°C is markedly inferior in both initial bond strength and equilibrium bond strength.

Examples 10 to 13 and Comparative Example 3

A cationic emulsion was produced in the same manner as in Examples 1-6 except that the monomer composition employed for the production of the cationic emulsion was as follows:
(Monomer composition)

| | |
|---|---|
| Butyl acrylate | 50 parts |
| 2-Ethylhexyl acrylate | 30 parts |
| Dimethyldiallylammonium chloride | 5 parts |
| Styrene | 10 parts |
| DMAPMAA-EP (dimethylaminopropylmethacrylamideepichlorohydrin adduct) | 5 parts |

Separately, flocculant compositions were prepared according to the formulas given in Table 3 and the pH of each composition was adjusted to 10 with sodium hydroxide. The solid content of each flocculant composition was 10%.

Using the thus-obtained flocculants and the above cationic emulsion, the bond strength test described in Examples 1-6 was performed. The results thus obtained are also shown in Table 3.

Table 3

| | Example 10 | Example 11 | Example 12 | Example 13 | Comparative Example 3 |
|---|---|---|---|---|---|
| Flocculant component | SNOWTEX 30 (1) | JONCRYL 678 (2) | PELEX SS-L (3) | YODOSOL AE23 (4) | – |
| Initial bond strength (g/25 mm) | 510 | 780 | 810 | 1100 | 0 |
| Bond strength (g/25 mm) | 1010 | 1880 | 1910 | > 2000 | 120 |
| Note | – | – | – | – | No flocculant used |

(1) Anionic colloidal silica : Nissan Chemical Industries
(2) Anionic water-solubel resin : Johnson
(3) Anionic surfactant : Kao Corp.
(4) Anionic resin emulsion : Kanebo-NSC

In each of Examples 10-13, the initial bond strength as well as the bond strength in the equilibrium state was good, whereas, in Comparative Example 3 where the use of the above flocculant was omitted, both the initial bond strength and the equilibrium bond strength were much lower.

Examples 14 to 18 and Comparative Examples 4 & 5

A cationic emulsion was produced in the same manner as in Examples 1-6 except that the monomer composition used for the production of said cationic emulsion was as follows:
(Monomer composition)

| | |
|---|---|
| Butyl acrylate | 40 parts |
| 2-Ethylhexyl acrylate | 30 parts |
| Methyl acrylate | 10 parts |
| Methyl methacrylate | 12 parts |
| DEAPA-EP (diethylaminopropyl acrylateepichlorohydrin adduct) | 8 parts |

Separately, flocculant compositions were prepared using a 5% aqueous solution of an anionic surfactant (NEOPELEC No. 6; Kao Corporation) and adjusting the pH with sulfuric acid and sodium hydroxide as shown below in Table 4.

Using the thus-obtained flocculants and the above cationic emulsion, the bond strength test described in Examples 1-6 was performed. The results obtained are also shown in Table 4.

Table 4

| | | pH of flocculant | Initial bond strength (g/25 mm) | Bond strength (g/25 mm) |
|---|---|---|---|---|
| Example | 14 | 7.5 | 750 | 1190 |
| | 15 | 8.0 | 710 | 1480 |
| | 16 | 9.0 | 720 | 1920 |
| | 17 | 10.0 | 690 | 1880 |
| | 18 | 11.0 | 700 | 1990 |
| Comparative Example | 4 | 6.0 | 520 | 780 |
| | 5 | 7.0 | 480 | 790 |

In each of Examples 14–18, satisfactory bond strength data were obtained. In Comparative Examples 4 and 5, however, both the initial bond strength and the equilibrium bond strenght, in particular the equilibrium bond strength, were inferior due to the fact that the pH of the flocculants was not on the alkaline side.

Comparative Examples 19 to 24

Cationic emulsions were produced in the same manner as in Examples 1–6 except that the monomer compositions given in Table 5 were used for the production of said cationic emulsions.

Separately, a flocculant composition was prepared by ading 2 parts of an anionic surfactant (PELEX SS-L; Kao Corporation) to 100 parts of an anionic resin emulsion (YODOSOL AE23: Kanebo NSC), followed by adjustment of the pH to 10.5 with an equimolar mixture of sodium carbonate and potassium carbonate.

Using the flocculant thus obtained and the above cationic emulsions, the bond strength test described in Example 1-6 was performed. The adhesive systems were also tested for bond strength after repeated warming-cooling cycles. The results thus obtained are also shown in Table 5.

Table 5

| | Test No. | Example 19 | Example 20 | Example 21 | Example 22 | Example 23 | Example 24 | Comparative Example 6 |
|---|---|---|---|---|---|---|---|---|
| Monomer composition (parts) | 2-Ethylhexyl acrylate | 42 | 90 | 5 | – | 45 | 80 | 70 |
| | Butyl acrylate | 40 | – | 80 | 93 | 45 | 10 | 29 |
| | DMAPAM · EP | 5 | 2 | – | 6 | 5 | – | – |
| | Vinyl monochloroacetate | – | 3 | 5 | – | – | 5 | – |
| | Styrene | 10 | – | 5 | – | – | 4 | – |
| | Acrylonitrile | – | 5 | 5 | – | – | – | – |
| | Divinylbenzene | – | – | – | 1 | – | – | – |
| | Diethylaminoethyl methacrylate | 3 | – | – | – | 5 | 1 | 1 |
| Initial bond strength (g/25 mm) | | 1200 | 820 | 750 | 1380 | 1510 | 940 | 150 |
| Bond strength (g/25 mm) | | > 2000 | 1460 | 1550 | 1980 | > 2000 | 1800 | 400 |
| Bond strength after repeated warming-cooling cycles (g/25 mm) | | 1800 | 1050 | 850 | 1800 | > 2000 | 1090 | 160 |

* Comparative Examples

The testing for bond strength after repeated warming-cooling cycles was carried out in the following manner.

Bond strength testing after repeated warming-cooling cycles

According to the method of testing for bond strength as described in Examples 1–6, the cationic emulsion and the flocculant were simultaneously sprayed onto a flexible board and immediately thereafter a sheet was applied to the board. After allowing the assembly to stand for 24 hours, the assembly was immersed in a saturated solution of potassium hydroxide at 50°C for 16 hours and then at 20°C for 8 hours.

This warming-cooling cycle was repeated 7 times in total. Then, after 3 days of allowing to stand, the specimen was tested for 180°C peel strength at a pulling rate of 300 mm/min.

The results shown in Table 5 indicate that remarkable increases were achieved in all the bond strength data, inclusive of the initial bond strength data, in Comparative Examples 19, 22 and 23. In particular, it is to be noted that the bonds were resistant to temperature changes, showing almost no differences between the equilibrium bond strength and the bond strength after the repeated warming-cooling cycles. Considerable decreases in the initial bond strength, equilibrium bond strength and bond strength after repeated warming-cooling cycles were observed in Comparative Examples 20 and 21 as compared with Comparative Examples 19, 22 and 23. This is due to the use, as the alkali-crosslinkable monomer, of vinyl monochloroacetate in lieu of an epihalohydrin group-containing monomer. It is therefore apparent that an epihalohydrin group-containing monomer should be preferred as the alkali-crosslinkable monomer to a vinyl monohaloacetate from the bond strength improvement standpoint. In Comparative Example 6, where no alkali-crosslinkable monomer was used at all, all the bond strength data, including the initial bond strength data, were much lower.

Finally it shall be noted to the above comparative examples 19 to 24 that they do contain data wherein the alkali cross-linkable monomer does not fall within the structure specified in the main claim. These examples do now serve as a basis for comparison.

## Claims

1. An emulsion type adhesive system which comprises a first liquid which is a cationic emulsion containing, as a main component thereof, component (A) defined below and a second liquid which is a flocculant composition containing component (B) defined below and having a pH of not less than 7.5, said first and second liquids, upon contact therebetween or mixing with each other, producing a binding effect:

(A) an acrylic resin obtained by copolymerization of at least one ethylenically unsaturated, alkali-crosslinkable monomer of the general formula

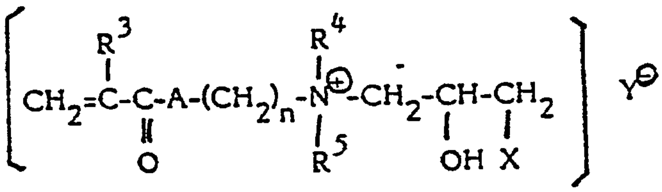

(1)

(wherein $R^3$ is a hydrogen atom or a methyl group, $R^4$ and $R^5$ may be the same or different and each is a methyl or ethyl group, A is -O- or -NH-, X is a chlorine, bromine or iodine atome, Y is an organic or inorganic anion, and n is an integer of 2 or 3,)

and at least one acrylic ester of formula (2) given below:

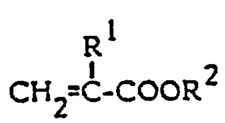

(2)

(wherein $R^1$ is a hydrogen atom or a methyl group and $R^2$ is an alkyl group containing 1-18 carbon atoms or a cycloalkyl group;)

(B) an anionic compound, characterized in that said acrylic resin has a glass transition temperature of not higher than 0°C.

2. The emulsion type adhesive system of claim 1, wherein said acrylic resin contains the repeating unit introduced by said ethylenically unsaturated, alkali-crosslinkable monomer in an amount of 0,5–25% by weight.

3. The emulsion type adhesive system of claim 1 or 2, wherein said acrylic resin has a glass transition temperature of not higher than –10°C.

4. The emulsion type adhesive system of any of claims 1–3, wherein said ethylenically unsaturated alkali-crosslinkable monomer is an epihalohydrin adduct.

5. The emulsion type adhesive system of any of claims 1–4, wherein said flocculant composition has a pH of not less than 9.

6. The emulsion type adhesive system of any of claims 1–5, wherein said anionic compound is selected from the group consisting of an anionic resin emulsion, an anionic surfactant and a water-soluble anionic resin.

**Revendications**

1. Composition adhésive du type en émulsion, qui comprend un premier liquide qui est une émulsion cationique contenant, comme composant principal, un composant (A) défini ci-dessous et un second liquide qui est une composition floculante contenant un composant (B) défini c-dessous et ayant un pH non inférieur à 7,5, lesdits premier et second liquides, au contact l'un de l'autre ou lorsqu'ils sont mélangés l'un à l'autre, produisant un effet de liaison:

(A) résine acrylique obtenue par copolymérisation d'au moins un monomère à non-saturation éthylénique réticulable par les alcalis, de formule générale

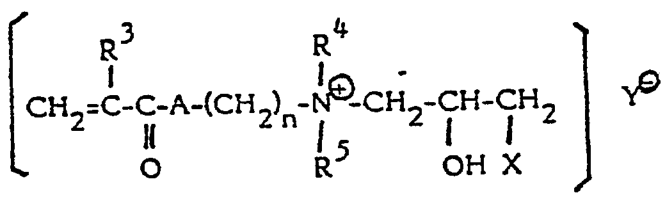

(1)

dans laquelle $R^3$ est un atome d'hydrogène ou un groupe méthyle, $R^4$ et $R^5$ peuvent être identiques ou différents et chacun d'eux est un groupe méthyle ou éthyle, A représente -O- ou -NH-, X est un atome de chlore, de brome ou d'iode, Y est un anion organique ou inorganique et n est un nombre entier égal à 2 ou 3, avec au moins un ester acrylique de formule (2) indiquée ci-dessous:

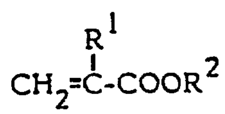

(2)

dans laquelle $R^1$ est un atome d'hydrogène ou un groupe méthyle et $R^2$ est un groupe alkyle contenant 1 à 18 atomes de carbone ou un groupe cycloalkyle;

(B) composé anionique, caractérisée en ce que ladite résine acrylique a une température de transition vitreuse ne dépassant pas 0°C.

2. Composition adhésive du type en émulsion selon la revendication 1, dans laquelle ladite résine acrylique contient le motif répété introduit par ledit monomère à non-saturation éthylénique réticulable par les alcalis en une proportion de 0,5 à 25% en poids.

3. Composition adhésive du type en émulsion suivant la revendication 1 ou 2, dans laquelle ladite résine acrylique a une température de transition vitreuse ne dépassant pas –10°C.

4. Composition adhésive du type en émulsion suivant l'une quelconque des revendications 1 à 3, dans laquelle le monomère à non-saturation éthylénique réticulable par les alcalis est un produit d'addition d'une épihalogénhydrine.

5. Composition adhésive du type en émulsion suivant l'une quelconque des revendications 1 à 4, dans laquelle la composition floculante a un pH non inférieur à 9.

6. Composition adhésive du type en émulsion suivant l'une quelconque des revendications 1 à 5, dans laquelle ledit composé anionique est choisi dans le groupe comprenant une émulsion de résine anionique, un surfactant anionique et une résine anionique hydrosoluble.

**Patentansprüche**

1. Emulsionstyp-Klebemittelsystem, das eine erste Flüssigkeit, die eine kationische Emulsion ist und als deren Hauptkomponente die im folgenden definierte Komponente (A) enthält, und eine zweite Flüssigkeit umfaßt, die eine Ausflockungszusammensetzung ist und die im folgenden definierte Komponente (B) enthält und einen pH nicht unter 7,5 hat, wobei die erste und zweite Flüssigkeit nach gegenseitigem Kontakt oder Mischen miteinander die Klebewirkung ergeben:

(A) ein Acrylharz, erhalten durch Copolymerisation von mindestens einem ethylenisch ungesättigten, alkali-vernetzbaren Monomer der allgemeinen Formel

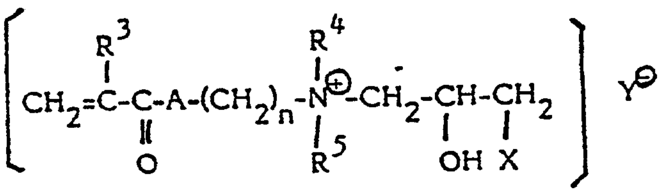

(1)

worin $R^3$ ein Wassertoffatom oder eine Methylgruppe ist, $R^4$ und $R^5$ gleich oder verschieden sein können und jeweils eine Methyl- oder Ethylgruppe sind, A -O- oder -NH- ist, X ein Chlor-, Brom- oder Jodatom ist, Y ein organisches oder anorganisches Anion ist und n eine ganze Zahl von 2 oder 3 ist, und mindestens einem Acrylester der folgenden Formel (2)

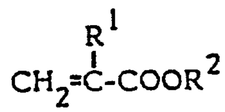

(2)

worin $R^1$ ein Wasserstoffatom oder eine Methylgruppe ist und $R^2$ eine Alkylgruppe mit 1 bis 18 Kohlenstoffatomen oder eine Zykloalkylgruppe ist;

(B) eine anionische Verbindung, dadurch gekennzeichnet, daß das Acrylharz eine Glasübergangstemperatur nicht höher als 0°C hat.

2. Emulsionstyp-Klebemittelsystem nach Anspruch 1, worin das Acrylharz die wiederkehrende, durch das ethylenisch ungesättigte, alkali-vernetzbare Monomer eingeführte Einheit in einer Menge von 0,5 bis 25 Gew.-% enthält.

3. Emulsionstyp-Klebemittelsystem nach Anspruch 1 oder 2, worin das Acrylharz eine Glasübergangstemperatur nicht höher als −10°C hat.

4. Emulsionstyp-Klebemittelsystem nach irgendeinem der Ansprüche 1 bis 3, worin das ethylenisch ungesättigte, alkali-vernetzbare Monomer ein Epihalogenhydrin-Addukt ist.

5. Emulsionstyp-Klebemittelsystem nach irgendeinem der Ansprüche 1 bis 4, worin die Ausflockungszusammensetzung einen pH nicht unter 9 hat.

6. Emulsionstyp-Klebemittelsystem nach irgendeinem der Ansprüche 1 bis 5, worin die anionische Verbindung aus der aus einer anionischen Harzemulsion, einem anionischen oberflächenaktiven Mittel und einem wasserlöslichen anionischen Harz bestehenden Gruppe ausgewählt ist.